# EUROPEAN PATENT APPLICATION

(11) **EP 0 971 506 A1**
(43) Date of publication of application: **12.01.2000**
(21) Application number: 98112499.3
(22) Date of filing: 06.07.1998
(51) Int. Cl.: H04L 12/28, H04L 12/40, H04N 7/10, H04B 1/20

(54) **Method to control a network device in a network comprising several devices**

(71) Applicant: Sony International (Europe) GmbH, 50829 Köln (DE)
(72) Inventor: Schwager, Andreas, 70736 Fellbach (DE)
(74) Representative: Hoffmann, Jörg Peter, Dr. Ing.

(57) **Abstract**

The inventive method to control a network device (3) with a controller (1, 4) in a network prevents an unwanted or uncontrolled overtaking of a network device (3) that is controlled by a first controller (1) from a second controller (4) by the possibility of the first controller (1) to reserve the controllable network device (3) to become its primary controller that cannot simply be overruled by the control demands of other controllers available in the network.

## Description

This invention concerns a method to control a controllable network device with a control device in a network comprising several control devices, in particular it concerns a strategy allowing a purposeful overtaking of the controllability of a controllable device.

Generelly, a network, such as a home network, comprises several devices. Such a device can be a controller to control other devices or a target device, e.g. a controllable device being controlled by a controller. It is possible that several controllers can control one target device. Existing target devices, such as e.g. tuners are able to broadcast several programs according to the commands of several controllers into the network. However, it might be possible that not every combination of receivable programs can be broadcasted into the network, since e.g. the tuner only has access to one satellite dish that can only be directed to one satellite resulting in a conflict if a first controller sends a command to receive a first broadcasting station transmitted via a first satellite and a second controller commands the tuner to direct its satellite dish to a second satellite and to tune its transponder to a second broadcasting station transmitted via this second satellite. In this case, conventional home networks first broadcast the program of the first broadcasting station into the network and after the command of the second controller to switch to the second broadcasting station, they follow the commands of the second controller and therefore will switch-off the braodcasting of the first broadcasting station to be able to satisfy the second controller.

Therefore, it is the object of the present invention to offer a reliable method to control a controllable device with a control device in a network comprising several control devices. According to the inventive method it should be secured that a control device accessing a controllable device, i.e. controlling this controllable device, cannot simply be overruled by another control device.

The inventive method is characterized in that a first control device is able to reserve the controllable device as a primary controller so that a second control device or a further control device cannot overrule the controls of the first control device with their control commands.

According to this inventive method it is not possible for a control device to influence a controllable device with its control command after another control device has reserved the controllable device. However, in a preferred embodiment of the present invention it is possible that a reservation of a control device can be pre-empted by another control device. Pre-emption in this context means that the reservation of a control device gets cancelled and the pre-empting control device gets the reservation itself.

Advantageous embodiments of the present invention as defined in independent claim 1 are defined in dependent claims 2 to 14, respectively.

Further objects, features and advantages of the present invention will be better understood from the following detailed description of advantageous embodiments thereof taken in conjunction with the accompanying drawings, wherein
- **Fig. 1**: shows reservation messages between software elements and the resource manager of a network;
- **Fig. 2**: shows reservation messages and pre-emption in an example with a non-shareable tuner;
- **Fig. 3**: shows reservation messages and pre-emption in an example with a shareable tuner; and
- **Fig. 4**: shows reservation messages and pre-emption in an example with a shareable tuner with one primary controller, one secondary controller and one further controller.

In all figures the same referencesigns denote the same devices.

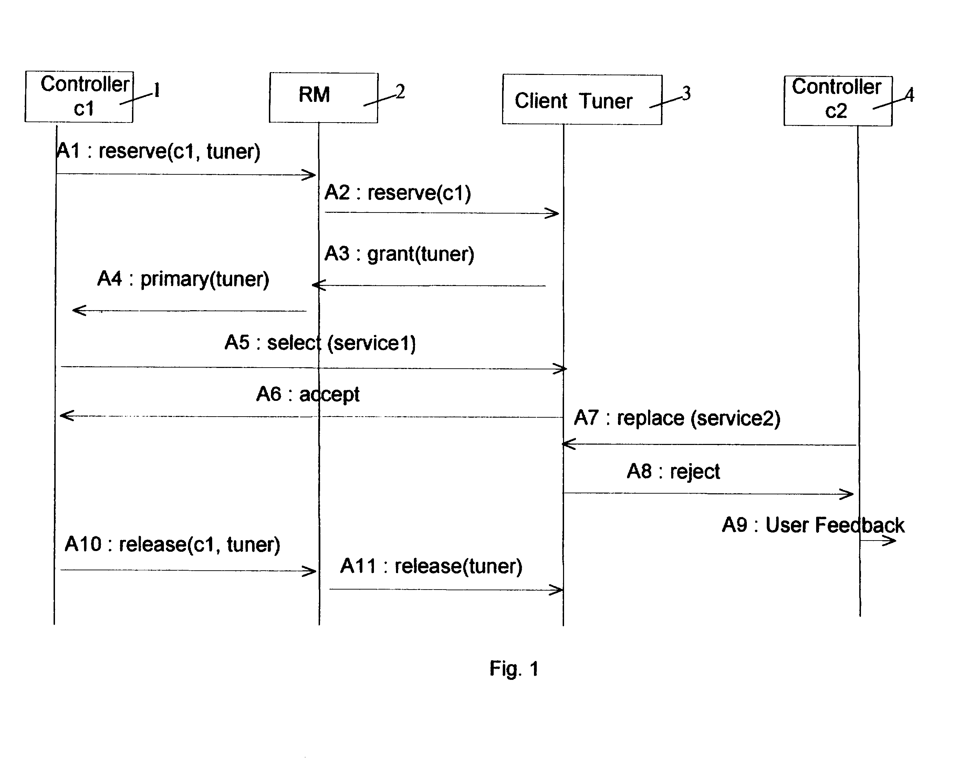

Fig. 1 shows a network comprising a first controller 1, a resource manager 2, a tuner 3 that serves as client or target and a second controller 4. These devices are connected e.g. via a 1394 home network based bus system.

Fig. 1 shows that a free target device can be reserved. Furthon, it is shown that all control commands from another controller than the controller that has reserved the target device will be rejected. After the rejection a user feedback is automatically generated for information purposes.

In a first step A1 the first controller 1 reserves the tuner 3 via the resource manager 2. Therefore, a reserve command is sent from the first controller 1 to the resource manager 2 that indicates that the first controller 1 wants to reserve the tuner 3. The resource manager 2 directs this reserve command in a second step A2 to the tuner 3 indicating that the first controller 1 wants to have a reservation. The tuner 3 is not reserved at the moment, therefore, a free target device. Following therefrom, the tuner 3 grants its reservation and sends a grant message to the resource manager 2, indicating that the reserve request from the first controller 1 was succesful in a third step A3. Thereafter, the resource manager 2 indicates to the first controller 1 that the first controller 1 is now the primary controller for the tuner 3 in a step A4.

After such a reservation procedure the first controller 1 as primary controller for the tuner 3 is able to send control commands to the tuner 3 that will be carried out by the tuner 3. As an example it is shown that the first controller 1 sends a select command for a certain service, e.g. service 1, to the tuner 3 in a step A5. This select command is directly sent to the tuner 3, since every controller sends all his control commands directly to the target device. The target device responds directly to the commanding controller as it is shown in Fig. 1 in step A6, where the tuner 3 sends an accept message directly to the first controller 1.

Service 1 that is selected by the first controller 1 is distributed via the whole 1394 network. Therefore, other devices can access this service and display the video pictures and/or reproduce the sounds transmitted in service 1. It follows, that it might be possible that another user accessing a second controller 4 might wish to select another service instead of service 1. It is also possible that the second controller 4 tries to replace the service 1 by another service, e.g. service 2, on its own or on basis of a pre-program action. Fig. 1 shows such a replace command from the second controller 4 directly directed to the tuner 3 in a step A7. This replace command indicates that the tuner 3 should switch from service 1 to service 2. Since the tuner 3 is already reserved by the first controller 1 as its primary controller it responds to the replace command of the second controller 4 with a reject message in step A8. The second controller 4 generates a user feedback in step A9 that is either displayed directly on the second controller 4 or on any other display device in the network. Therefore, the user accessing the second controller 4 knows that his replace command from service 1 to service 2 has been rejected. It is also possible that it can be seen from the user feedback which other controller is the primary controller of the addressed device, here the first controller 1 for the tuner 3, and/or why the command has been rejected, e.g. because it is not possible for the tuner 3 to broadcast service 1 together with service 2.

In steps A10 and A11 it is shown that the first controller 1 releases the target device, i.e. the tuner 3, from being its primary controller. Therefore, the first controller 1 sends a release command to the resource manager 2 in step A10 indicating that the first controller 1 will release the tuner 3. The resource manager 2 therefore sends a release command to the tuner 3 in step A11.

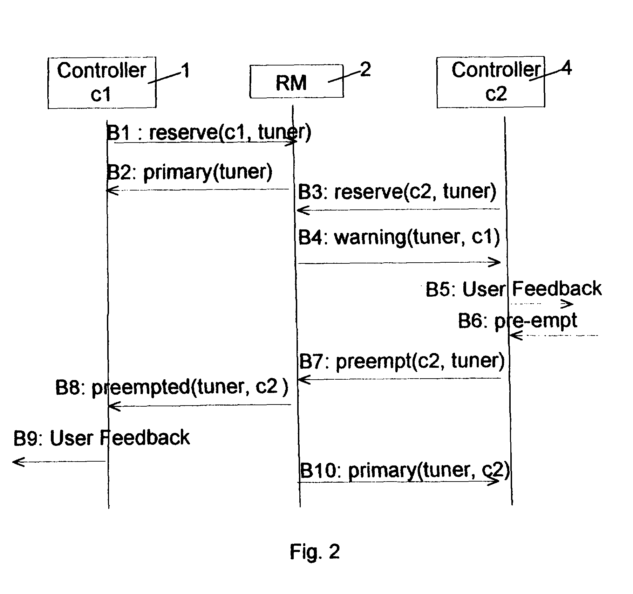

Fig. 2 shows how the second controller 4 can take the ownership of the reservation, i.e. how the second controller 4 can pre-empt the first controller 1. It is also shown that the first controller 1 gets an information who got his reservaion after he was pre-empted.

For simplification purposes Fig. 2 does not show the controlled target device, i.e. the tuner 3, since all reservation and pre-emption commands have to be and are performed only via the resource manager 2.

In step B1 the first controller 1 reserves the tuner 3 via the resource manager 2 as in step A1. Therefore, he gets an acknowledgement that he is the primary controller of the tuner 3 in step B2 as in step A4.

In step B3 the second controller 4 also tries to reserve the tuner 3 that is only able to be controlled by one device in this example to become its primary controller. Since the tuner 3 is already reserved by the first controller 1 a warning message is sent from the resource manager 2 to the second controller 4 in a step B4 indicating that the tuner 3 is already reserved by the first controller 1. The second controller 4 generates a user feedback in step B5 showing all relevant information to the user accessing the second controller 2, e.g. that the tuner 3 is already reserved by the first controller 1. In step B6 the second controller 4 gets an instruction to pre-empt either from a user or from another control system. Therefore, the second controller 4 sends a pre-empt command to the resource manager 2 indicating that the second controller 4 pre-empts the tuner 3. The resource manager 2 in turn generates a pre-empted message that is sent to the first controller 1 in step B8 and indicates that the tuner 3 was pre-empted by the second controller 4. In step B9 the first controller 1 generates a user feedback showing this message either on its own display or on any display device in the network. In step B10 the resource manager 2 sends a primary message to the second controller 4, indicating that the second controller 4 is now the primary controller of the tuner 3.

In a consumer electronic home network it follows from this reservation philosophy, that an user B is able to pre-empt an user A who reserved a target device before. On the other hand, the user A can pre-empt again or he can go within the home to the user B and discuss who should have the possibility to control a certain target device. In this way it is not possible that a user can't access a network device. In any case the network device can be pre-empted by the user so that he can send his control demands to the respective target device.

If there is no user at the second controller 4 who can give the pre-emption command to said second controller 4 it can be implementation dependent how the machine shall decide. If the application of the second controller 4 is e.g. a fire alarm that pre-empts a display device, the first user will always accept that he was pre-empted. He is then in an informed state and can pre-empt back again, if desired. It is possible that such an automatic pre-emption is restricted to a predeterminded amount of times within a certain time period. In case that one user got pre-empted he knows from the user feedback what kind of application took over his device. So he can stop this application within the home or simply pre-empt back again, if the application is not absolutely necessary, e.g. an internet download that could be done in the same way two hours later. The decision if a controller, where no user is present, shall pre-empt or not is implementation dependent to the application running on the controller. E.g. an application sending a fire alarm will pre-empt every time, a non time dependent application shall not pre-empt. The manufacturer may implement to a controller that runs without a user a switch, if the controller shall pre-empt or not. E.g. a VCR may support such a switch for each scheduled action individually. The switch will be set by the user at the time he sets up the scheduled action. If the switch is set to pre-empt the user will be remind that he set up the scheduled action at the time the scheduled action starts.

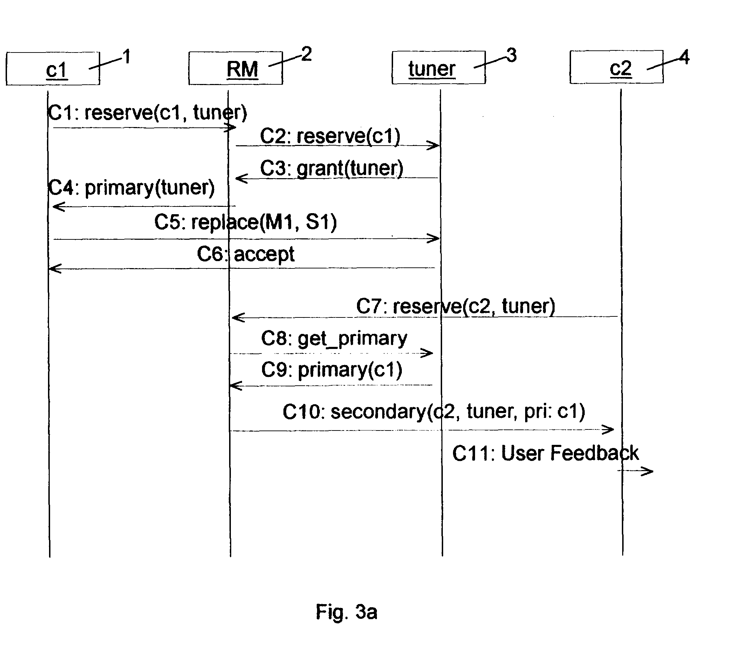

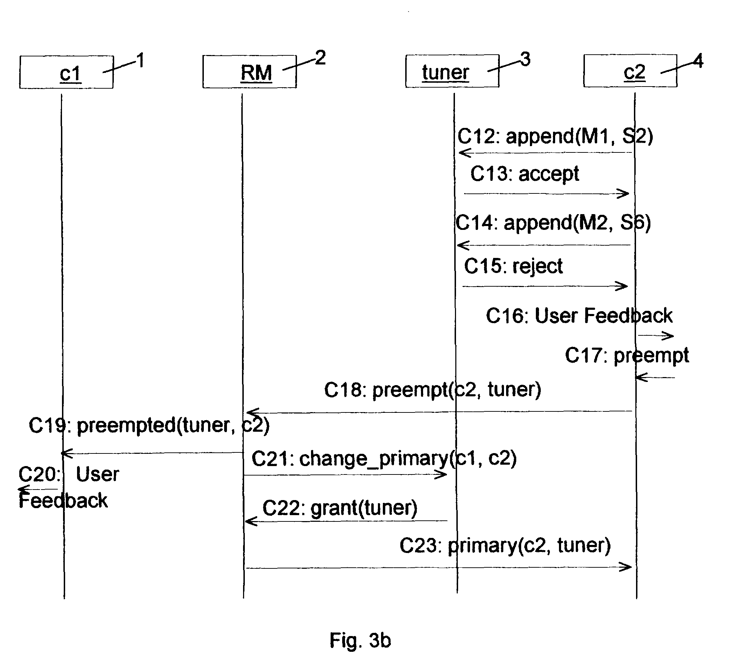

Fig. 3 that is split into two parts, i.e. Fig. 3a and Fig. 3b, shows an example in which a target device is shareable and can therefore be controlled by several control devices. As mentioned above, depending on the capacity of the target device it is not always possible to satisfy all control devices.

Fig. 3 shows again the same devices as shown in Fig. 1 except for the tuner 3 that is now shareable in-between several controllers. Steps C1 to C4 directly correspond to steps A1 to A4. Therefore, the first controller 1 is the primary controller of the tuner 3 after his reservation.

The tuner 3 can offer different services at the same time that are broadcasted in the same transponder. Its limitation is that he can't offer services of different transponders at the same time.

In step C5 the first controller 1 commands to replace the currently offered program with the service 1 of transponder 1. The tuner 3 accepts and sends an accept message directly to the first controller 1 in a step C6. In step C7 the second controller 4 also directs a reserve command to the resource manager 2 indicating that the second controller 4 wants to reserve the tuner 3. The resource manager 2 knows that there is already a reservation for the tuner 3. He sends a get-primary-command to the tuner 3 in step C8 to inform itself about the primary controller of the tuner 3. The tuner 3 sends a message to the resource manager 3 in step C9 that indicates that the first controller 1 is the primary controller of the tuner 3. If the recource manager is already in the knowledge of the rpimary controller on the tuner steps C8 and C9 are not necessary. In response to this message the resource manager 2 sends a message to the second controller 4 in step C10 indicating that the second controller 4 is the secondary controller of the tuner 3 and that the primary controller of the tuner 3 is the first controller 1. The second controller 4 gives a user feedback in step C11 showing the message just received.

As secondary controller the second controller 4 may have limited control functions depending on the target device so that the secondary controller cannot overrule the primary controller. In the shown case the second controller 4 as secondary controller cannot select another transponder as the first controller 1 as primary controller, since the tuner 3 can only offer the services of one transponder at the same time.

In step C12 the second controller 4 sends an append command to the tuner 3 that service 2 of transponder 1 should also distributed in the network. Since this is no conflict with the possibilities of the tuner 3 in view of the commands of the primary controller, this command is accepted by the tuner 3 that in turn sends an accept message to the second controller 4 in step C13. In step C14 the second controller 4 sends another append command to the tuner 3 indicating that the tuner 3 shall distribute service 6 of transponder 2 to the network. The limitation of a digital tuner is that only services from one transponder can be selected. It is impossible with one tuner to select a second service from another transponder than the first service. Therefore, the tuner 3 rejects the append command of the second controller 4 in step C15. Thereafter, the second controller 4 gives an user feedback of this rejection in step C16. In step C17 the second controller C4 gets an input to pre-empt the tuner 3 to be able to control the tuner 3 to distribute service 6 of transponder 2 to the network. Therefore, the second controller 4 sends a pre-empt command to the resource manager 2 in step C18 indicating that the second controller 4 pre-empts the tuner 3. The resource manager 2 informs the first controller 1 that he got pre-empted from being the primary controller for the tuner 3 by the second controller 4 with a pre-empted message in step C19. After reception of the pre-empted message in step C19 the first controller 1 gives a user feedback C20 showing all available information of the pre-emption.

In step C21 the resource manager transmits a change primary command to the tuner 3 so that the tuner 3 changes its primary controller from the first controller 1 to the second controller 4. Thereafter, the tuner 3 sends a grant message to the resource manager 2 in step C22 that is indicating that the change primary command of the resource manager was successful. Therefore, in step C23 the resource manager indicates to the second controller 4 that it is the primary controller of the tuner 3.

After being the primary controller of the tuner 3 the second controller 4 is now able to select a certain service in a certain transponder like the first controller 1 has done it in step C5.

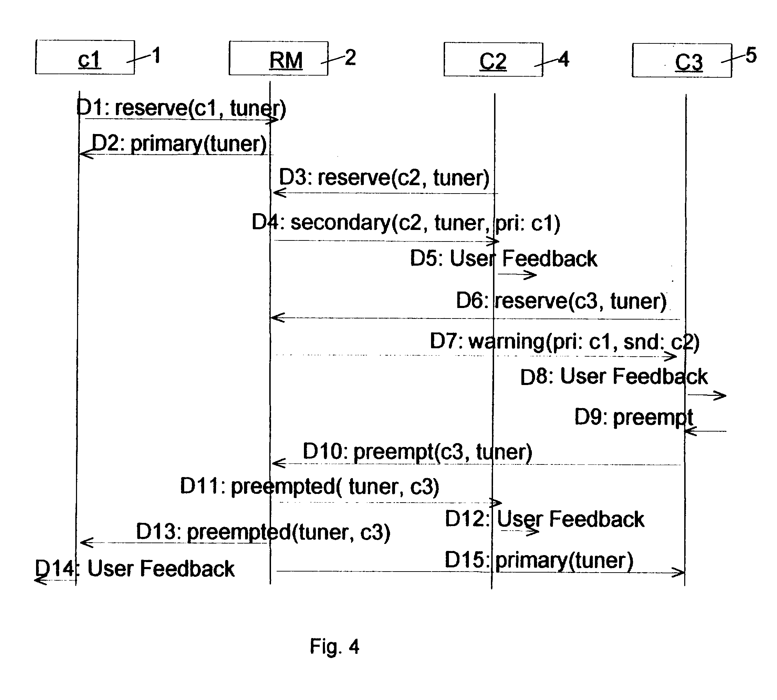

Fig. 4 shows the network like it is shown in Fig. 2, but with an additional third controller 5. In this case it is possible for the not shown tuner 3 to have a primary controller and a secondary controller.

Steps D1 and D2 directly correspond to steps B1 and B2 shown in Fig. 2, i.e. the first controller 1 reserves the tuner 3 via the resource manager 2 in step D1 and receives the message of the tuner 3 via the resource manager 2 that the first tuner 1 is the primary controller of the tuner 3 in step D2.

Steps D3 to D5 directly correspond to steps C7 to C11 shown in Fig. 3a, i.e. the second controller 4 reserves the tuner 3 via the resource manager 2 in step D3 and gets back the message from the tuner 3 via the resource manager 2 that the second controller 4 is the secondary controller of the tuner 3 and the primary controller of the tuner 3 is the first controller 1, whereafter this message is presented as user feedback in step D5.

In step D6 the third controller 5 sends a reserve command to the tuner 3 to become its first or secondary controller. As this is not possible the tuner 3 distributes a warning to the third controller 5 via the resource manager 2 that its primary controller is already the first controller 1 and its secondary controller is already the second controller 4. Thereafter, the third controller 5 gives a user feedback showing this message in step D8. In step D9 the third controller 5 receives a pre-emption instruction and thereafter it sends a pre-empt command to the resource manager 2 in step D10 indicating that third controller 5 will take over the control of the tuner 3. The resource manager 2 sends a message to the second controller 4 in step D11 that it got pre-empted by the third controller 5 regarding the secondary control of the tuner 3, whereafter the second controller 4 presents a user feedback in step D12. The resource manager 2 also sends a message to the first controller 1 in step D13 that it got pre-empted regarding the primary control of the tuner 3 by the third controller 5, whereafter the first controller 1 presents a user feedback in step D14 indicating this message. Finally, the resource manager sends a message to the third controller 5 that it is now the primary controller of the tuner 3.

It is now possible for the third controller 5 to directly full control the tuner 3.

As can be taken from the description of these examples, it is also according to the present invention possible that a first controller having a reservation of a controllable target device can be overruled by a second controller with a pre-emption command, but in this case the overruling is not conducted by accident or unwanted, since a pre-emption is only performed after a reserve command or a command to the target device was unsuccessful, the pre-empting controller knows the its preceding controller and the pre-empted controller will get notified what controller has pre-empted.
The invention is not limited to the exemplatory above described 1394 based home network and also not to consumer electronic devices as target devices or control devices. It is also thinkable that e.g. computer equipment may be controlled under use of the inventive reservation strategy.

## Claims

1. Method to control a controllable device (3) with a control device (1, 4, 5) in a network comprising several control devices (1, 4, 5), **characterized in that** a first control device (1) is able to reserve the controllable device (3) as a primary controller so that a second control device (4, 5) or a further control device can not overrule the controls of the first control device with their control commands.

2. Method according to claim 1, **characterized in that** a second control device (4, 5) can reserve the controllable device (3) after the reservation of the first control device (1) as a secondary controller so that a further control device can not overrule the controls of the second control device (4, 5) with its control commands.

3. Method according to claim 1 or 2, **characterized in that** the controllable device (3) sends a rejection to a second control device (4, 5) working as secondary controller trying to overrule the first control device (1) working as primary controller or to a further control device trying to overrule the first control device (1) working as primary controller or a second control device (4, 5) working as secondary controller, and said rejection includes a list of all primary and/or secondary controllers.

4. Method according to claim 3, **characterized in that** a controllable device (3) sends its rejections directly to the control device (1, 4, 5) that gets rejected.

5. Method according to claim 3 or 4, **characterized in that** a control device (4, 5) shows a message after it has received a rejection.

6. Method according to anyone of claims 1 to 5, **characterized in that** the second control device (4, 5) working as secondary controller or the further control device is able to pre-empt the primary and/or the secondary controllers at the controllable device so that it becomes the primary controller for the controllable device (3).

7. Method according to claim 6, **characterized in that** a control device can only pre-empt a first control device (1) and/or a second control device (4, 5) of a certain controllable device (3) after a user action.

8. Method according to claims 6 or 7, **characterized in that** a pre-empted first control device (1) and/or second control device (4) gets a message which second control device (4, 5) or further control device has pre-empted said first control device (1) and/or second control device (4).

9. Method according to anyone of claims 6 to 8, **characterized in that** a control device can only pre-empt a first control device (1) and/or a second control device (4, 5) of a certain controllable device (3) for a predetermined amount of times in a certain time period.

10. Method according to anyone of claims 1 to 9, **characterized in that** a control device (1, 4, 5) sends its control commands directly to the controllable device (3) that should be controlled.

11. Method according to anyone of claims 1 to 10, **characterized in that** a control device (1, 4, 5) can reserve the controllable device (3) or pre-empt another control device (1, 4) via a recource manager (2) included in the network.

12. Method according to anyone of claims 1 to 11, **characterized in that** said network is a home network.

13. Method according to anyone of claims 1 to 12, **characterized in that** said network is a 1394 based network.

14. Method according to anyone of claims 1 to 13, **characterized in that** said controllable device (3) is a consumer electronic device.
